Europäisches Patentamt

European Patent Office

Office européen des brevets

(11) Numéro de publication: **0 162 783 B1**

(12) **FASCICULE DE BREVET EUROPEEN**

(45) Date de publication de fascicule du brevet: **10.11.93**　(51) Int. Cl.⁵: **C02F 1/52**, B01D 21/01

(21) Numéro de dépôt: **85401002.2**

(22) Date de dépôt: **21.05.85**

(54) **Procédé pour le traitement et l'épuration des eaux, par floculation en lit fluidisé des particules en suspension.**

(30) Priorité: **23.05.84 FR 8408026**
**16.11.84 FR 8417539**

(43) Date de publication de la demande:
**27.11.85 Bulletin 85/48**

(45) Mention de la délivrance du brevet:
**10.11.93 Bulletin 93/45**

(84) Etats contractants désignés:
**AT BE CH DE FR GB IT LI LU NL SE**

(56) Documents cités:
**EP-A- 0 085 629　　EP-A- 0 152 711**
**WO-A-83/02294　　CH-A- 287 573**
**DE-A- 3 332 214　　FR-A- 1 501 912**

(73) Titulaire: **MORNEX Limited**
**P.O. Box 53**
**161/166 Fleet Street**
**Londres EC4A 2HB(GB)**

(72) Inventeur: **Elmaleh, Samuel**
**Les Olivettes 14- Clapiers**
**F-34170 Castelnau Le Lez(FR)**
Inventeur: **Grasmick, Alain**
**Les Aires**
**7, rue des Aires-Montferrier/Lez**
**F-34000 Montpellier(FR)**

(74) Mandataire: **Gomez-Acebo y Pombo, José Miguel**
**c/o CLARKE, MODET & Co.**
**Paseo de la Castellana 164**
**E-28046 Madrid (ES)**

## Description

La présente invention, concerne un procédé pour le traitement et l'épuration des eaux, par floculation en lit fluidisé des particules en suspension.

On sait que les eaux usées urbaines contiennent, par exemple environ 200 à 300 mg/l de matière en suspension et ont une concentration totale en $DBO_5$ (demande biochimique en oxygène à cinq jours) d'environ 200 à 400 mg/l, dont 100 à 200 mg/l de $DBO_5$ dissoute. Les matières polluées qu'elles contiennent peuvent être grossièrement réparties en pollution solide (environ un tiers), en pollution colloïdale (également un tiers) et en pollution dissoute (un tiers).

Les filières habituelles d'épuration d'eaux utilisent des procédés biologiques ou des procédé physico-chimiques.

Bien que les procédés biologiques permettent des réductions de pollution importantes, ils résistent mal aux variations de flux de pollution des eau à traiter ou aux impulsions de produits toxiques qui peuvent se produire, lorsque des rejets industriels sont reçus par la station d'épuration.

Il y a environ 10 à 20 ans, les procédés physico-chimiques ont soulevé un vif intérêt et, tout particulièrement, les procédés dans lesquels un séparateur liquide-solide est placé en aval d'un floculateur, par exemple les procédés de clarifoculation, qui associent un floculateur et un décanteur.

Les avantages de ces unités proviennent de la possibilité de traiter des flux de pollution très divers, ce qui est le cas des stations estivales à population très variable. Elles permettent d'atteindre une réduction de 70 % à 90 % de la pollution entrante, la pollution résiduelle pouvant éventuellement subir un traitement d'affinage.

Leurs principaux inconvénients résultent de l'utilisation obligée de réactifs coûteux à des doses importantes, ce qui implique des productions de boues considérables, avec des minéralisations moyennes.

On a aussi proposé (demande de brevet européen publiée N° 0 085 629) des procédés dans lesquels on fait passer un liquide contenant des matières en suspension à travers un milieu granulaire en lit fixe jusqu'à colmatage partiel ou total de ce milieu granulaire, on décolmate au moins partiellement ce milieu en lit fixe, et on le fait à nouveau traverser par le liquide contenant les particules en suspension, en présence ou non de réactifs chimiques avec pour résultat la formation d'agrégats floculés. Ces procédés présentent toutefois l'inconvénient d'impliquer un colmatage initial du milieu granulaire.

Il a également été proposé (demande de brevet européen publiée sous le n. 0152711) des procédés de concentration de particules microscopiques en suspension dans un liquide, dans lesquels on fait passer le liquide à travers un lit fluidifié et en l'absence totale d'agents chimiques de floculation et, de façon optionnelle, par application d'un piston, jusqu'à ce que se forment des agrégats, après quoi on interrompt l'alimentation du liquide lorsque se produit le colmatage et que l'on récupère par la partie inférieure les agrégats décantés.Ces procédés présentent l'inconvénient de ne pas être continus et logiquement, ceci implique une limitation dans la quantité d'eau traitée et par conséquent, dans le rendement.

Le but de la présente invention est de proposer un procédé d'épuration des eaux, par passage de celles-ci à travers un milieu granulaire fluidisé, sans colmatage préliminaire de ce milieu en lit fixe.

On sait en effet que le phénomène de floculation des particules en suspension dans un liquide est lié à deux paramètres principaux :

a) les forces de répulsion-attraction entre particules, qui peuvent être modifiées par adjonction de réactifs appropriés ;

b) le gradient de vitesse ou gradient hydraulique G défini par la formule :

$$G = \sqrt{\frac{P}{\mu V}}$$

où P désigne la puissance dépensée dans l'appareil, $\mu$ la viscosité dynamique de la phase liquide et V le volume de la phase liquide .

Pour produire un gradient de vitesse, la plupart des floculateurs usuels utilisent l'énergie d'agitation.

Les inventeurs ont cependant établi que des milieux granulaires peuvent être utilisés dans les procédés de floculation, l'énergie dégradée correspondant aux chutes de pression.

Un lit fluidisé de matériau granulaire peut être avantageusement utilisé dans ce but. En effet :

- d'une part, la chute de pression reste constante dans tout le domaine de fluidisation ;
- d'autre part, on peut montrer que le rapport $G/G_0$ du gradient de vitesse au gradient de vitesse à l'état préfluidisé varie peu avec le nombre de fluidisations (rapport de la vitesse en fût vide, encore

2

dite "upflow superficial velocity")que l'on utilise à la vitesse minimum de fluidisation ;

- enfin, le rapport $Gt/G_0t_0$ du nombre de CAMP $Gt$ à l'état observé au nombre de CAMP $G_0t_0$ à l'état préfluidisé varie peu.

Il en résulte qu'en calculant un floculateur en lit fluidisé au minimum de fluidisation, les performances réelles du floculateur pourront facilement être transposées dans le domaine de fluidisation.

Par ailleurs, il est intéressant de noter qu'au minimum de fluidisation, $G_0$ est proportionnel à la masse volumique apparente du matériau constitutif du lit ainsi qu'au diamètre moyen des grains. De même, $G_0t_0$ est proportionnel au rapport $H_0/d$ de la hauteur $H_0$ du lit fixe au diamètre moyen $d$ des grains et il est indépendant de la masse volumique du matériau.

La présente invention est fondée sur les propriétés ci-dessus décrites des lits fluidisés en tant que moyen de production d'un gradient hydraulique et sur la propriété d'autofloculation des eaux usées obtenues dans les dispositifs qui seront décrits ci-après.

L'invention a pour objet un procédé pour la séparation de particules minérales ou organiques en suspension dans l'eau qui comprend les étapes consistant à: doter cette eau de microorganismes en quantité suffisante pour qu'ils sécrètent une quantité effective d'agents floculants à base de polysaccharides et faire passer l'eau à travers un milieu granulaire fluidifié avec une expansion de 30 à 200%, collecter les agrégats floculés une fois passé le lit fluidifié et passer l'eau à travers un séparateur liquide-solide.

Le phénomène d'agglomération qui se produit dans le lit fluidisé emprisonne une partie des matières dissoutes de pollution de la même manière que dans un procédé de clarifloculation classique et l'on obtient ainsi un effluent partiellement épuré.

Pour réaliser un lit fluidisé, on pourra utiliser n'importe quel matériau de garnissage, par exemple du sable, et sa granulométrie pourra être faible, de 50 $\mu$m à 1 cm.

Ce matériau granulaire pourra être plus ou moins lourd que l'eau, le passage du liquide à travers le milieu granulaire s'effectuant à flux ascendant, si ce matériau est plus lourd que l'eau, et à flux descendant dans le cas contraire. La masse volumique de ce matériau sera préférentiellement de 0,8 à 3 g/cm$^3$.

Les temps de passage en fût vide des eaux à traiter seront d'environ 3 à 10 minutes, avec une vitesse pouvant varier de 0,01 à 200 m/h.

Le nombre de fluidisation (rapport de la vitesse de passage du liquide traité à la vitesse minimum de fluidisation du matériau granulaire) sera de 1, 1 à 15.

Dans le cas où les particules en suspension sont des colloïdes instables, le procédé conforme à l'invention pourra être mis en oeuvre sans addition de réactifs de floculation -il y aura alors autofloculation des matières en suspension- ou avec addition d'un réactif de floculation. Dans le cas de suspension de particules grenues, il sera généralement nécessaire d'ajouter un réactif de floculation au milieu à traiter.

Selon ce procédé de façon tout à fait inattendue, les inventeurs ont établi qu'afin de provoquer ou de favoriser la floculation desdites particules en suspension, on peut avantageusement ajouter à la suspension à purifier, préalablement au traitement de floculation ou au cours de celui -ci, des boues résiduaires provenant du traitement d'eaux usées. Lorsque le milieu à traiter est lui-même une eau usée, il suffit ainsi de recycler à l'alimentation de l'enceinte contenant le milieu granulaire en lit fluidisé une partie des agrégats séparés.

Les travaux des inventeurs ont montré, en effet, que les bactéries de la microflore banale des eaux à épurer sécrètent des polysaccharides aptes à constituer un mucilage, qui sert de liant non seulement pour les cellules bactériennes elles-mêmes, mais également pour les particules microscopiques de la suspension

Les dessins schématiques annexés illustrent diverses formes de mise en oeuvre de l'invention. Sur ces dessins, qui n'ont, bien entendu, aucun caractère limitatif :

La figure 1 représente un ensemble de traitement des eaux usées, dans lequel les eaux traitées circulent à flux ascendant dans un réacteur à lit fluidisé constitué de grains d'un matériau de masse volumique supérieure à 1 ;

La figure 2 représente un système analogue, dans lequel les eaux usées circulent à flux descendant dans un réacteur où les grains du lit fluidisé ont une masse volumique inférieure à 1.

Les figures 3 à 5 sont des schémas d'autres formes de mise en oeuvre de l'invention.

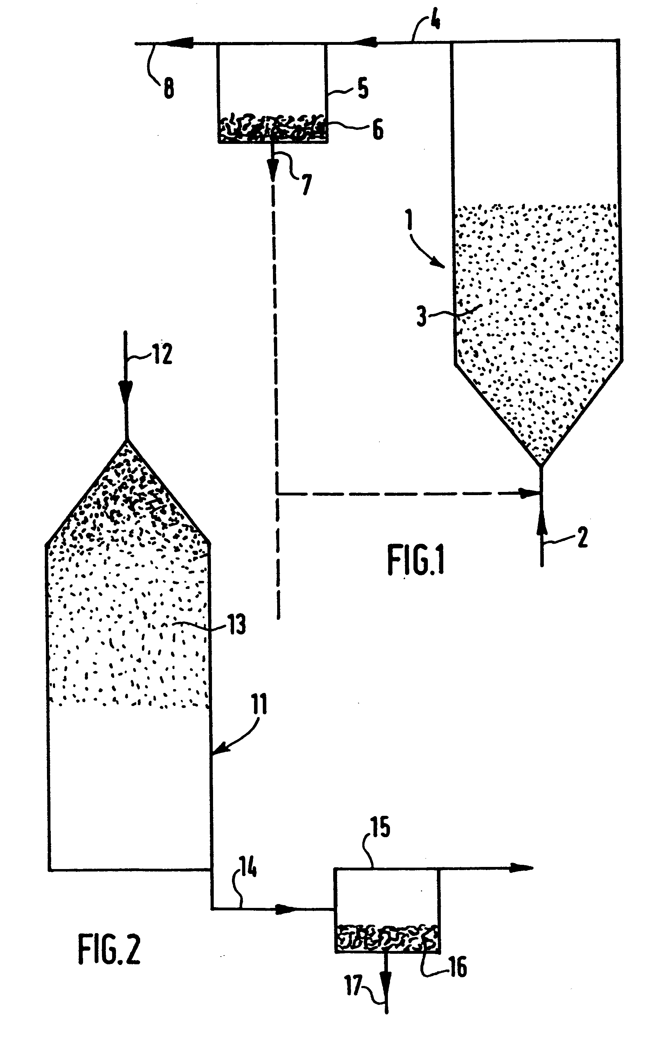

Le dispositif de la figure 1 comprend un réacteur I, qui est alimenté en eau à traiter par la ligne 2 à sa partie inférieure et qui contient un lit fluidisé 3 constitué de grains d'un matériau de masse volumique supérieure à celle de l'eau.

L'eau traitée contenant les agrégats de particules obtenus par le passage des eaux usées à travers le lit fluidisé 3 est évacuée par la ligne 4, à la partie supérieure du réacteur 1, vers un décanteur 5, à la partie inférieure duquel les boues 6 sont récupérées par la ligne 7, tandis que l'eau épurée est recueillie à sa partie supérieure par la ligne 8.

Ainsi qu'il a été indiqué ci-dessus, dans le cas où les particules en suspension dans l'eau traitée sont d'origine organique, ce qui est le cas lorsqu'il s'agit d'eaux usées à épurer, le procédé conforme à l'invention peut être mis en oeuvre sans addition de floculants usuels, ceux-ci pouvant néanmoins être utilisés pour accélérer la floculation. Dans le cas d'une suspension de particules minérales, il sera nécessaire d'ajouter des floculants et, dans les deux cas, un tel agent floculant pourra être avantageusement constitué par des boues résiduaires d'épuration des eaux usées. Dans le cas où l'eau à traiter est elle-même une eau usée, il suffira ainsi de recycler au réacteur 1, par la ligne 9, à partir de la ligne 7, une partie des boues séparées dans le décanteur 5.

Dans le cas de la figure 2, le réacteur 11, alimenté en eaux usées à sa partie supérieure par la ligne 12, contient un lit fluidisé 13 de grains d'un matériau d'une masse volumique inférieure à 1.

L'eau traitée contenant les agrégats de particules obtenus par passage à travers le lit fluidisé est récupérée à la base du réacteur 13 par une ligne 14 et est évacuée vers un décanteur 15, à la base duquel les boues 16 sont récupérées par la ligne 17, tandis que l'eau épurée est recueillie à sa partie supérieure par la ligne 18.

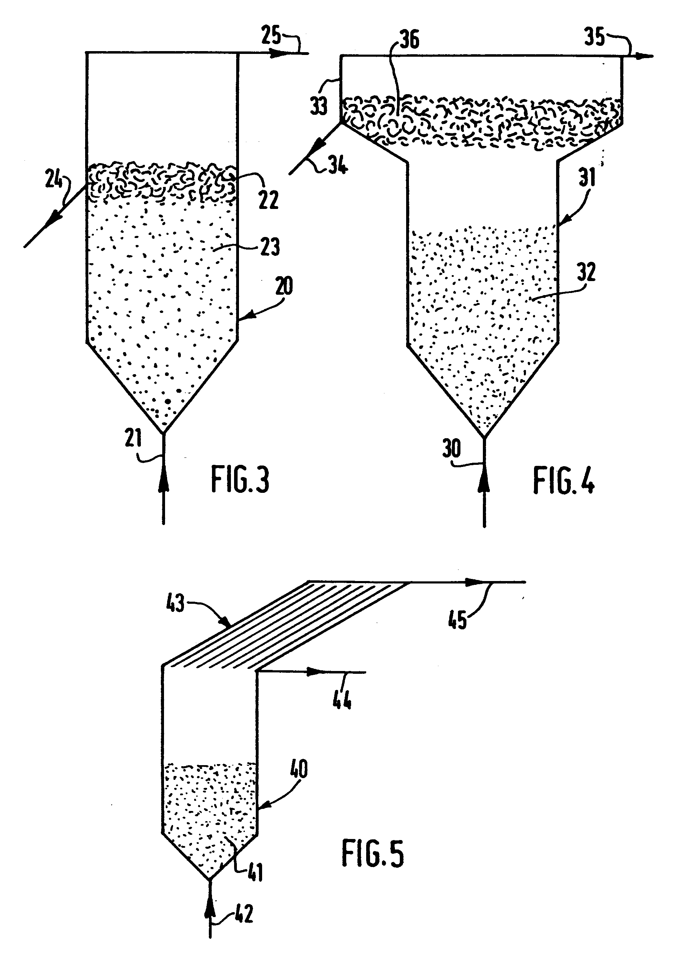

La figure 3 illustre l'application de procédé selon l'invention au cas où la vitesse du liquide à traiter amené à la partie inférieure du réacteur 20 par une ligne 21 est inférieure à la vitesse de décantation des agrégats 22 formés. Ceux-ci sont ainsi maintenus en suspension à la partie supérieure du lit fluidisé 23, d'où ils peuvent être évacués latéralement du réacteur par une ligne 24, tandis que le liquide partiellement épuré est évacué à la partie supérieure du réacteur par une ligne 25.

Une solution analogue peut être adoptée même si la vitesse du liquide à traiter, amené par la ligne 30 à la base du réacteur 31 contenant le lit fluidisé 32 (figure 4) est supérieure à la vitesse de décantation des agrégats 36 formés. Il suffit de prévoir, à la partie supérieure du réacteur 31 un bac 33 de section supérieure à celle de la base du réacteur et suffisante. pour que la vitesse du liquide partiellement épuré qui le traverse soit inférieure à la vitesse de décantation des agrégats 36. Ceux-ci sont ainsi maintenus en suspension à la base du bac 33, d'où ils peuvent être évacués par la ligne 34, tandis que le liquide partiellement épuré est évacué à la partie supérieure du bac par la ligne 35.

La figure 5 représente enfin une autre forme de mise en oeuvre de l'invention, dans laquelle le réacteur 40, contenant le lit fluidisé 41, est alimenté à une vitesse supérieure à la vitesse de décantation des agrégats formés. Dans ce cas, le réacteur 40 est équipé à sa partie supérieure d'un décanteur multitubulaire 43.

Les agrégats se déposent à la partie inférieure des tubes inclinés de ce décanteur, c'est-à-dire à la partie supérieure du réacteur 40, d'où ils sont évacués par la ligne 44, tandis que le liquide épuré est évacué par la ligne 45 à la partie supérieure du décanteur 43.

Bien entendu, ces divers formes de mise en oeuvre de l'invention n'ont aucun caractère limitatif.

Les Exemples qui suivent illustrent les avantages de l'invention.

EXEMPLE 1 (Comparatif)

Cet exemple illustre l'autofloculation de particules en suspension dans une eau usée, sans addition de réactif.

On traite à flux ascendant, dans une colonne ayant un diamètre de 20 cm et contenant un garnissage de sable de masse volumique égale à 1,7 g/cm$^3$ et de granulométrie moyenne égale à 270 $\mu$m, avec une hauteur de lit granulaire fixe de 1,40 m, une eau usée ayant une DBO$_5$ totale de 200 mg/l et contenant 200 mg/l de matières en suspension.

L'expansion du lit de sable est de 50 %, le temps de passage de l'eau usée est de 7 mn et sa vitesse de passage de 10 m/h.

L'eau traitée contenant les agrégats de matière en suspension est ensuite transférée dans un décanteur, où les boues obtenues, après un temps de passage de 7 mn, ont une concentration de 5 g/l. Après 30 minutes de décantation, ces boues ont une concentration de 15 g/l.

Après passage dans le décanteur, la réduction de DBO$_5$ de l'eau traitée est de 90 % et la diminution de matière en suspension de 70 à 85 % suivant les essais.

EXEMPLE 2 (Comparatif)

Cet Exemple illustre également l'autofloculation de particules en suspension. On utilise une colonne cylindrique de 10 cm de diamètre et de 2,1 m de hauteur. Cette colonne est garnie sur une hauteur de 1,1 m d'un sable de chantier tamisé entre 200 et 400 $\mu$m, avec un diamètre moyen de 350 $\mu$m ; la masse volumique de ce matériau est de 2,7 g/cm$^3$, sa vitesse minimum de fluidisation étant de 4,23 m/h.

Une clarification de l'effluent est nécessaire après traitement dans cette colonne d'une eau à épurer ; les déterminations sont donc effectuées sur l'eau clarifiée, après une décantation standard en éprouvette de 15 minutes.

L'unité est alimentée par une eau usée urbaine dégrillée présentant en moyenne les caractéristiques suivantes :

| | |
|---|---|
| - solides en suspension | 150 mg/l , |
| - carbone organique total | 67 mg/l, |
| - température | 18°C. |

On traite cette eau dans la colonne sans addition de coagulant, à diverses vitesses de circulation.

5

Les résultats obtenus sont donnés dans le Tableau I suivant.

**TABLEAU I**

| Vitesse de l'eau (m/h) | Expansion du lit granulaire (%) | Efficacité d'élimination des solides en suspension (%) | Efficacité d'élimination du carbone organique total (%) |
|---|---|---|---|
| 17,3 | 40 | 45 | 38 |
| 20,3 | 50 | 52 | 47 |
| 30 | 70 | 64 | 50 |
| 50,8 | 90 | 80 | 60 |

L'effluent présente une excellente aptitude à la clarification; en moyenne, l'indice de MOHLMAN atteint 35 cm³/g. Après 15 mn de décantation en éprouvette, la boue obtenue présente des concentrations en solides supérieures à 10 g/l.

EXEMPLE 3

Cet Exemple illustre la mise en oeuvre du procédé selon l'invention avec addition de réactifs chimiques. L'unité est identique à celle utilisée ci-dessus avec une injection de chlorure ferrique $FeCl_3$ prévue à l'entrée.

L'eau d'alimentation présente les mêmes caractéristiques que dans l'exemple précédent. Les essais sont effectués avec diverses concentrations de chlorure ferrique.

Tous les essais sont effectués avec une expansion du lit de sable de 50 %, soit une vitesse de 20,3 m/h.

Les résultats obtenus apparaissent dans le Tableau II ci-après.

TABLEAU II

| Concentration en $FeCl_3$ (mg/l) | Efficacité d'élimination des solides en suspension (%) | Efficacité d'élimination du carbone organique total (%) |
|---|---|---|
| 0 | 52 | 47 |
| 50 | 58 | 53 |
| 100 | 77 | 66 |
| 150 | > 80 | 73 |
| 250 | > 80 | 73 |
| 350 | > 80 | 73 |

Ces résultats montrent que l'ajout d'un réactif permet d'augmenter les performances de l'épuration à un point de consigne donné.

EXEMPLE 4

Cet Exemple concerne les effets de l'addition de boues résiduaires, provenant de l'épuration d'eaux usées, aux liquides à traiter par le procédé de l'invention.

Deux séries d'essais sont effectuées :
- en "jar test" traditionnel : l'unité "jar test" utilisée correspond au modèle classique du Water Research Centre ;
- dans un floculateur en lit fluidisé conforme à l'invention : Ce floculateur conforme est une colonne cylindrique de 3 cm de diamètre garnie de sable de granulométrie 165 $\mu$m et de masse volumique 2,7 g/cm$^3$ ; les déterminations sont effectuées sur le surnageant de l'effluent après 15 mn de décantation en éprouvette.

Les unités sont alimentées avec une suspension de bentonite ne présentant aucun caractère d'autofloculation. Cette suspension est traitée avec du chlorure ferrique, coagulant classique servant de référence. Les performances sont comparées à une floculation à l'aide de boues épaissies provenant d'une unité d'épuration urbaine par boues activées (boues secondaires épaissies BSE).

I- Essais en jar test

| - concentration en bentonite | 150 mg/l |
|---|---|
| - gradient de vitesse | 60 s$^{-1}$ |

Les essais ont été effectués avec différentes doses de réactif. Les résultats obtenus sont rassemblés dans le Tableau III suivant.

7

TABLEAU III

| Réactif | Dose de réactif (mg/l) | Efficacité d'élimination de la turbidité(%). |
|---|---|---|
| Sans réactif | 0 | 40 |
| FeCl$_3$ | 60 | 85 |
| BSE | 60 | 90 |
| FeCl$_3$ | 120 | 92 |
| BSE | 120 | 95 |
| FeCl$_3$ | 200 | 92 |
| BSE | 200 | 90 |

Ces résultats montrent la possibilité d'utiliser des boues secondaires en tant que réactif de floculation, avec des performances comparables sinon meilleures qu'un coagulant chimique.

2- Essais en lit fluidisé

Seules des boues secondaires (BSE) sont utilisées. L'unité fonctionne avec un nombre de fluidisation de 8,35,ce qui correspond à une expansion de 70 % et une vitesse d'alimentation de 9, 4 m/h. La concentration en bentonite à l'entrée de l'unité est de 150 mg/l.

Les essais sont effectués avec différentes concentrations en BSE. Les résultats sont rassemblés dans le Tableau IV ci-après.

TABLEAU IV

| Dose de BSE (mg/l) | Efficacité d'élimination des matières en suspension (mg/l) |
|---|---|
| 0 | 30 |
| 50 | 77 |
| 100 | 80 |
| 150 | 90 |
| 200 | 85 |
| Ces exemples prouvent donc la grande efficacité du procédé selon l'invention. | |

**Revendications**

**1.** Procédé pour la séparation de particules minérales ou organiques en suspension dans l'eau, caractérisé en ce qu'il comprend les étapes suivantes:
   a) fourniture à la dite eau de microorganismes en quantité suffisante pour la sécrétion d'une quantité effective d'agent floculant à base de polysaccharides et passage de l'eau à travers un milieu granulaire fluidisé pour floculer en agrégats les dits microorganismes et les dites particules dans le lit fluidisé, qui subit une expansion de 30 à 200%,
   b) collecte des agrégats floculés en aval du lit fluidisé, et
   c) passage de l'eau à travers un séparateur liquide-solide adéquat, dans lequel la séparation de l'effluent liquide et des particules floculées est obtenue quand la vitesse en fût vide de l'effluent à la vitesse mini mum de fluidisation du matériau granulaire est compris entre 1,1 et 15, le diamètre moyen du milieu granulaire étant compris entre 50 μm et 1 cm.

**2.** Procédé selon la revendication 1 dans lequel la masse volumique du matériau est comprise entre 0,8 et 3 g/cm.

3. Procédé selon la revendication 1 dans lequel la vitesse en fût vide de l'eau traitée varie entre 0,01 et 200m/h.

4. Procédé selon la revendication 1 dans lequel la auteur de lit fluidisé varie entre 10 cm et 5 m.

5. Procédé selon la revendication 1 où le matériau granulaire du lit fluidisé a une densité supérieure à 1 et où l'eau s'écoule du bas vers le haut du lit fluidisé.

6. Procédé selon la revendication 1 où le matériau granulaire du lit fluidisé a une densité inférieure à 1 et où l'eau s'écoule du haut vers le bas du lit fluidisé.

7. Procédé selon la revendication 1 dans lequel l' eau à traiter passe à travers le lit fluidisé sans addition d'autre agent floculant que celui secrété par lesdits microorganismes.

8. Procédé selon la revendication 1 dans lequel l'eau à traiter traversant le lit fluidisé contient un agent floculant ajouté, autre que celui sécrété par les microorganismes.

9. Procédé selon la revendication 8 dans lequel le dit agent floculant est sécrété par des microorganismes contenus dans des boues secondaires provenant d'une unité d'épuration.

10. Procédé selon la revendication 9 appliqué à l'épuration d'eau usées urbaines et dans lequel une partie des boues séparées de ces eaux est recyclée dans le milieu granulaire fluidisé pour servir d'agent floculant.

11. Procédé selon la revendication 1 dans lequel les particules sont des particules microscopiques.

## Claims

1. Method for separating mineral or organic particles in suspension in water, characterised in that it comprises the following steps:
   a) supplying to the said water microorganisms in a quantity sufficient for secreting an effective quantity of polysaccharide-based flocculating agent, and passing the water through a fluidised granular medium for flocculating the said microorganisms and the said particles into aggregates in the fluidised bed, which undergoes 30 to 200% expansion;
   b) collecting the flocculated aggregates downstream of the fluidised bed; and
   c) passing the water through a suitable liquid-solid separator, in which the liquid effluent and the flocculated particles are separated when the ratio of the velocity of the effluent treated to the minimum fluidisation velocity of the granular material is between 1.1 and 15, the average diameter of the granular medium being between 50 $\mu$m and 1 cm.

2. Method according to Claim 1, in which the volumic mass of the granular material is between 0.8 and 3 g/cm

3. Method according to Claim 1, in which the velocity of the processed water varies between 0.01 and 200 m/h.

4. Method according to Claim 1, in which the height of the fluidised bed varies between 10 cm and 5 m.

5. Method according to Claim 1, wherein the fluidised bed granular substance has a density greater than 1, and in which the water flows from the base to the top of the fluidised bed.

6. Method according to Claim 1, in which the fluidised bed granular substance has a density lower than 1, and in which the water flows from the top to the base of the fluidised bed.

7. Method according to Claim 1, in which the water to be processed passes through the fluidised bed without the addition of any flocculating agent other than that secreted by the said microorganisms.

**8.** Method according to Claim 1 in which the water to be processed by passing through the fluidised bed contains an added flocculating agent, other than that secreted by the microorganisms.

**9.** Method according to Claim 8, in which the said flocculating agent is secreted by microorganisms present in secondary sludge obtained from a purification unit.

**10.** Method according to Claim 9, applied to the purification of used urban waters, and in which some of the sludge separated from these waters is recycled in the fluidised granular medium in order to act as a flocculating agent.

**11.** Method according to Claim 1, in which the particles are microscopic particles.

**Patentansprüche**

**1.** Verfahren zum Abtrennen von mineralischen oder organischen, in Wasser suspendierten Partikeln, gekennzeichnet durch folgende Verfahrensschritte:

a) man gibt dem Wasser Mikroorganismen in derartiger Menge zu, daß eine wirksame Menge eines Ausflockungs-Wirkstoffes, auf der Basis von Polysacchariden, abgesondert wird, und man führt das Wasser durch ein fluidisiertes Granulat, um die genannten Mikroorganismen und die genannten Partikel als Aggregate, im fluidisierten Bett auszuflocken, welches eine Ausdehnung von 30 bis 200 % erfährt,

b) man sammelt stromabwärts des fluidisierten Bettes die ausgeflockten Aggregate, und

c) man führt das Wasser durch einen geeigneten Flüssigkeit-Feststoff-Trenner, in dem die ausfließende Flüssigkeit und die ausgeflockten Partikeln dann getrennt werden, wenn das Verhältnis der Ausfließgeschwindigkeit der behandelten Flüssigkeit zur Minimalgeschwindigkeit der Fluidisierung des Granulats zwischen 1,5 und 15 liegt, wobei der mittlere Durchmesser des Granluates zwischen 50 $\mu$m und 1 cm liegt.

**2.** Verfahren nach Anspruch 1, bei welchem das spezifische Gewicht des Granulat-Materials zwischen 0,8 und 3g/cm$^3$ liegt.

**3.** Verfahren nach Anspruch 1, wobei die Geschwindigkeit des behandelten Wassers zwischen 0,01 und 200 m/h liegt.

**4.** Verfahren nach Anspruch 1, wobei die Höhe des fluidisierten Bettes zwischen 10 cm und 5 m variiert.

**5.** Verfahren nach Anspruch 1, wo das Granulatmaterial des fluidisierten Bettes eine Dichte über 1 hat und wo das Wasser im fluidisierten Bett von unten nach oben strömt.

**6.** Verfahren nach Anspruch 1, wo das Granulatmaterial des fluidisierten Bettes eine Dichte unter 1 hat und das Wasser in dem fluidisierten Bett von oben nach unten strömt.

**7.** Verfahren nach Anspruch 1, wobei das zu behandelnde Wasser das fluidisierte Bett durchströmt, ohne daß ein anderer, eine Ausflockung bewirkender Wirkstoff zugegeben würde als der, der von den erwähnten Mikroorganismen abgesondert wird.

**8.** Verfahren nach Anspruch 1, wobei das das fluidisierte Bett durchströmende Wasser, neben dem von dem Mikroorganismen abgesonderten, eine Auflockung bewirkenden Stoff einen weiteren derartigen Stoff enthält.

**9.** Verfahren nach Anspruch 8, wobei der genannte zusätzliche, eine Ausflockung bewirkende Stoff von Mikroorganismen abgesondert wird, die in sekundären Schlämmen entahlten sind, welche aus einer Kläranlage kommen.

**10.** Verfahren nach Anspruch 9, angewandt auf die Reinigung städtischer Abwässer, wobei ein Teil der abgetrennten Schlämme dieser Abwässer in das fluidiserte Granulat-Milieu recycliert ist, um als eine Ausflockung bewirkender Stoff zu dienen.

**11.** Verfahren nach Anspruch 1, in welchem die Partikeln mikroskopische Partikeln sind.

FIG.1

FIG.2

FIG.3

FIG.4

FIG.5